# EUROPÄISCHE PATENTSCHRIFT

(11) **EP 3 369 539 B1**
(45) Veröffentlichungstag und Bekanntmachung des Hinweises auf die Patenterteilung: **08.01.2020**
(21) Anmeldenummer: 18152450.5
(22) Anmeldetag: 19.01.2018
(51) Int. Cl.: B27C 5/10, B23Q 17/22, B23Q 17/24, B25F 5/02

(54) **WERKZEUGMASCHINE MIT EINER AN EINER GRUNDPLATTE BEFESTIGTEN LASERDIODE**
MACHINE TOOL WITH A LASER DIODE ATTACHED TO A BASE PLATE
MACHINE-OUTIL AVEC UNE DIODE LASER FIXÉE À UNE SEMELLE SUPPORT

(30) Priorität: 01.03.2017 DE 102017203284
(43) Veröffentlichungstag der Anmeldung: 05.09.2018
(73) Patentinhaber: Robert Bosch GmbH, 70442 Stuttgart (DE)
(72) Erfinder: Kuehn, Thorsten, 70197 Stuttgart (DE); Ziegler, Roland, 73760 Ostfildern (DE)

(56) Entgegenhaltungen:
- EP-A1- 2 000 254
- EP-A2- 1 400 326
- GB-A- 2 431 983
- GB-A- 2 464 390
- US-A- 3 728 027
- US-A1- 2002 164 223
- US-A1- 2013 240 088

## Beschreibung

Die Erfindung betrifft eine Werkzeugmaschine gemäß dem Oberbegriff des Anspruchs 1. Eine Solche Werkzeugmaschine ist aus der EP 2 000 254 A1 bekannt.

### Offenbarung der Erfindung

Die erfindungsgemäße Werkzeugmaschine ist bevorzugt als Oberfräse ausgebildet. Ein Einsatzwerkzeug der Werkzeugmaschine ist als Fräswerkzeug ausgebildet. Die erfindungsgemäße Werkzeugmaschine mit den Merkmalen des unabhängigen Anspruchs hat den Vorteil, dass das Einstellen der Frästiefe konstruktiv einfach und kostengünstig vereinfacht wird. Eine Grundplatte ist an der Werkzeugmaschine angeordnet, wobei an der Grundplatte mindestens eine Laserdiode befestigt ist. Dazu weist die Grundplatte eine Durchgangsöffnung auf, in der die Laserdiode angeordnet ist. Vorteilhafterweise ist die Laserdiode derart an der Grundplatte angeordnet, dass ein Laserstrahl das Niveau der Grundplatte in der Durchgangsöffnung der Grundplatte markiert. Das Einsatzwerkzeug, insbesondere das Fräswerkzeug unterbricht den Lichtstrahl. Durch den Lichtpunkt auf dem Fräswerkzeug wird die eingestellte Tiefe des Fräswerkzeugs für einen Anwender der Werkzeugmaschine sichtbar. Der Vorteil der Erfindung ist die exakte Einstellbarkeit der Frästiefe ohne weitere Hilfsmittel.

Durch die in den Unteransprüchen angegebenen Merkmale sind vorteilhafte Weiterbildungen der erfindungsgemäßen Werkzeugmaschine nach dem Anspruch 1 möglich.

Bevorzugt ist der Laserstrahl ein feiner Lichtstrahl. Somit kann eine exakte Markierung des Laserstrahls gewährleistet werden.

Vorteilhafterweise ist eine Druckfeder an der Laserdiode angeordnet. Somit kann die Laserdiode vorteilhaft aus der Grundplatte herausgedrückt werden, um eine Frästiefe exakt einzustellen.

### Zeichnungen

In den Zeichnungen sind Ausführungsformen einer erfindungsgemäßen Werkzeugmaschine mit Grundplatte und Laseranzeige gezeigt.

Es zeigen:
- Figur 1: eine erfindungsgemäße Werkzeugmaschine in schematischer Darstellung,
- Figur 2: eine Ausführungsform einer Grundplatte einer Werkzeugmaschine mit Laseranzeige in schematischer Darstellung.

### Beschreibung

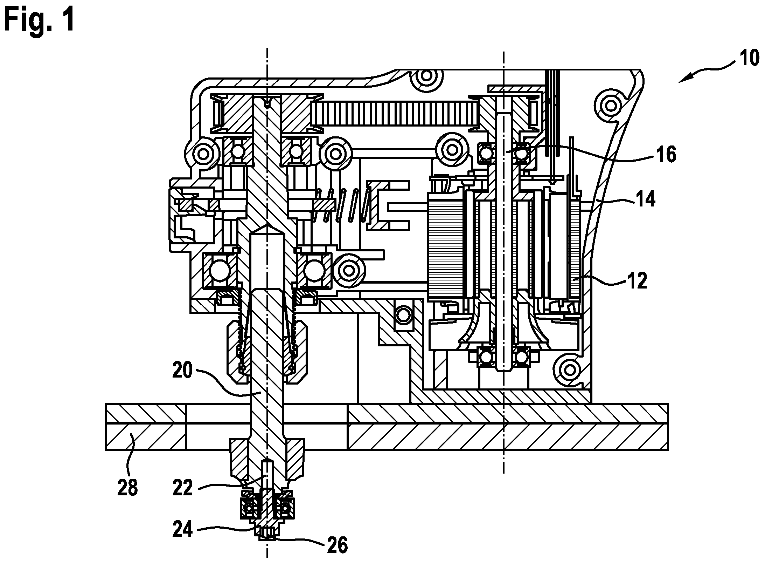

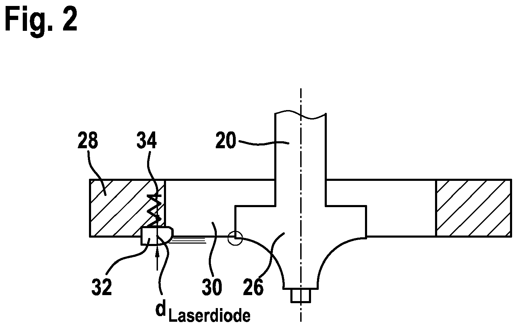

Figur 1 zeigt eine als Oberfräse ausgebildete Werkzeugmaschine 10. Ein elektromotorischer Antrieb 12 ist in einem ersten Gehäuse 14 angeordnet. Der elektromotorische Antrieb 12 ist mit einer Motorwelle 16 verbunden. Eine Abtriebswelle 20 ist ebenfalls im ersten Gehäuse 14 angeordnet. Die Abtriebswelle 20 setzt sich in einer Werkzeugspindel 22 fort. Es ist aber auch denkbar, dass die Abtriebswelle 20 über eine Kupplung mit der Werkzeugspindel 22 verbunden ist. Es ist aber auch denkbar, dass die Abtriebswelle 20 über ein konventionelles Getriebe oder einen Riementrieb mit der Werkzeugspindel 22 verbunden ist. Die Werkzeugspindel 22 trägt einen Werkzeughalter 24. Der Werkzeughalter 24 ist beispielsweise eine Spannzange. In die Spannzange wird ein Bearbeitungswerkzeug 26 gesteckt und mittels einer Überwurfmutter festgespannt. Das Bearbeitungswerkzeug 26 ist im Ausführungsbeispiel ein Fräswerkzeug. Die Werkzeugmaschine 10 ist geeignet zum Fräsen von Nuten beziehungsweise zum Kantenfräsen. An der Werkzeugmaschine 10 ist eine Grundplatte 28 angeordnet. Die Grundplatte 28 weist eine Durchgangsöffnung 30 auf, wie in Figur 2 ersichtlich ist. Die Durchgangsöffnung 30 befindet sich auf der Seite der Grundplatte 28, die auf einem zu bearbeitenden Werkstück aufliegt. Figur 2 zeigt, dass an der Grundplatte 28 eine Laserdiode 32 angeordnet ist. Die Laserdiode 32 ist derart an der Grundplatte 28 angeordnet, dass ein Laserstrahl das Niveau der Grundplatte 28 in der Durchgangsöffnung 30 der Grundplatte markiert. Der Laserstrahl ist bevorzugt ein feiner Lichtstrahl. Eine Druckfeder 34 ist an der Laserdiode 32 angeordnet, die dazu verwendet wird, die Laserdiode 32 zum Einstellen einer Frästiefe aus der Grundplatte 28 heraus zu drücken.

Das Fräswerkzeug 26 unterbricht den Lichtstrahl. Somit fällt der Laserstrahl auf das Fräswerkezug 26. Durch den Lichtpunkt auf dem Fräswerkzeug 26 wird die eingestellte Tiefe des Fräswerkzeugs 26 für einen Anwender der Handwerkzeugmaschine 10 sichtbar.

In dieser erfindungsgemäßen Ausführungsform ist der Laserstrahl direkt auf das Fräswerkzeug 26 gerichtet. Die Laserdiode 32 weist einen Durchmesser d_{Laserdiode} auf, der auf der unteren Seite der Grundplatte 28 herausragt, siehe Figur 2.

In der erfindungsgemäßen Ausführungsform nach Figur 2 ist die Laserdiode 32 versenkbar in die Grundplatte 28 eingebaut. Es bietet sich an, eine Druckfeder 34 gemäß Ausführungsbeispiel in Figur 2 zu verwenden, die die Laserdiode 32 zum Einstellen der Frästiefe aus der Grundplatte 28 herausdrückt.

## Patentansprüche

1. Werkzeugmaschine (10), insbesondere Oberfräse, mit einer Grundplatte (28) und einer an der Grundplatte (28) befestigten Laserdiode (32), wobei die Grundplatte (28) eine Durchgangsöffnung (30) aufweist, und mit einem Einsatzwerkzeug (26), insbesondere einem Fräswerkzeug, wobei die Laserdiode (32) derart an der Grundplatte (28) angeordnet ist, dass ein Laserstrahl das Niveau der Grundplatte (28) in der Durchgangsöffnung (30) der Grundplatte markiert, **dadurch gekennzeichnet, dass** die Laserdiode (32) versenkbar in die Grundplatte (28) eingebaut ist.

2. Werkzeugmaschine (10) nach Anspruch 1, **dadurch gekennzeichnet, dass** der Laserstrahl bevorzugt ein feiner Lichtstrahl ist.

3. Werkzeugmaschine (10) nach Anspruch 1 oder 2, **dadurch gekennzeichnet, dass** eine Druckfeder (34) an der Laserdiode (32) angeordnet ist, die dazu verwendet wird, die Laserdiode (32) zum Einstellen einer Frästiefe aus der Grundplatte (28) heraus zu drücken.

## Claims

1. Power tool (10), in particular router, having a base plate (28) and a laser diode (32) fastened to the base plate (28), wherein the base plate (28) has a through-opening (30), and having an application tool (26), in particular a milling tool, wherein the laser diode (32) is arranged on the base plate (28) such that a laser beam indicates the level of the base plate (28) in the through-opening (30) of the base plate, **characterized in that** the laser diode (32) is installed so as to be retractable into the base plate (28).

2. Power tool (10) according to Claim 1, **characterized in that** the laser beam is preferably a fine laser beam.

3. Power tool (10) according to Claim 1 or 2, **characterized in that** a compression spring (34) is arranged on the laser diode (32), said spring being used to push the laser diode (32) out of the base plate (28) in order to set a milling depth.

## Revendications

1. Machine-outil (10), en particulier défonceuse, comprenant une plaque de base (28) et une diode laser (32) fixée à la plaque de base (28), la plaque de base (28) présentant une ouverture de passage (30), et comprenant un outil d'insertion (26), en particulier un outil de fraisage, la diode laser (32) étant disposée sur la plaque de base (28) de telle sorte qu'un faisceau laser marque le niveau de la plaque de base (28) dans l'ouverture de passage (30) de la plaque de base, **caractérisée en ce que** la diode laser (32) est incorporée de manière escamotable dans la plaque de base (28).

2. Machine-outil (10) selon la revendication 1, **caractérisée en ce que** le faisceau laser est de préférence un faisceau laser fin.

3. Machine-outil (10) selon la revendication 1 ou 2, **caractérisée en ce qu'**un ressort de compression (34) est disposé au niveau de la diode laser (32), lequel est utilisé pour presser la diode laser (32) hors de la plaque de base (28) pour ajuster une profondeur de fraisage.
